# EUROPÄISCHE PATENTANMELDUNG

(11) **EP 3 124 883 A1**
(43) Veröffentlichungstag der Anmeldung: **01.02.2017**
(21) Anmeldenummer: 16178250.3
(22) Anmeldetag: 06.07.2016
(51) Int. Cl.: F24F 5/00, F24F 12/00

(54) **LUFTKONDITIONIERUNG FÜR EINE GEBÄUDEETAGE**

(30) Priorität: 29.07.2015 DE 102015112430
(71) Anmelder: Erwin Müller GmbH, 49808 Lingen (Ems) (DE)
(72) Erfinder: Hennig, Roland, 12157 Berlin (DE); Müller, Harald, verstorben (DE)
(74) Vertreter: Kalkoff & Partner

(57) **Zusammenfassung**

Beschrieben sind eine Luft-Konditionierungsanlage und ein Luft-Konditionierungsverfahren für eine Etage (12) eines Gebäudes (10). Zur Raumtemperierung ist eine Deckentemperierungsvorrichtung (16) mit Temperierungselementen (22) zur Anordnung an Raumdecken und ein Zufluss für ein Temperierungsmedium vorgesehen. Eine Lüftungsvorrichtung (30) umfasst mindestens einen Lufteinlass (32) und einen entfernt hiervon angeordneten Luftauslass (34). Am Lufteinlass (32) ist mindestens ein Einlass-Wärmetauscher (54) und am Luftauslass (34) mindestens ein Auslass-Wärmetauscher (68) vorgesehen. Um die für den Betrieb der Lüftungsvorrichtung (30) aufzuwendende Energie möglichst gering zu halten, sind der Einlass-Wärmetauscher (54) und der Auslass-Wärmetauscher (68) über eine Leitung (40) für ein Tauschmedium miteinander gekoppelt.

## Beschreibung

Die Erfindung betrifft eine Luft-Konditionierungsanlage für eine Gebäudeetage, ein hiermit ausgerüstetes Gebäude sowie ein Luft-Konditionierungsverfahren.

Vorliegend wird unter der "Luft-Konditionierung" eines Raumes, eines Gebäudes oder einer Etage die Herstellung gewünschter Umgebungsbedingungen der Raumluft verstanden, d. h. einerseits von deren Temperatur (Heizung/Kühlung) und andererseits die Luftqualität, d. h. insbesondere Feuchtigkeit sowie Gehalt an weiteren Stoffen, bspw. Sauerstoffgehalt, CO₂-Gehalt, Geruchsstoffe, Staubgehalt, Pollenkonzentration, etc.

Herkömmlich erfolgt die Luftkonditionierung von Räumen in Hochhäusern, d.h. in Gebäuden mit einer Vielzahl von Etagen, über eine zentrale Luftkonditionierung. Frischluft wird zentral, bspw. über eine Anlage auf dem Dach des Gebäudes angesaugt, gefiltert, entfeuchtet, temperiert und anschließend über in Schächten verlaufende Luftkanäle in die Etagen des Gebäudes verteilt. Somit erfolgt die Temperierung einerseits und Luftaufbereitung andererseits gemeinsam über die durch die Schächte zu den Etagen geführten Luftkanäle. Allerdings ist der Raumbedarf dieser Versorgung enorm, so dass hierdurch bis zu 15% oder gar 20% der Fläche von großen Gebäuden für die freie Nutzung verloren geht.

Allgemein ist die Temperierung von Räumen mittels Klimadecken bekannt.

Beispielsweise beschreibt die DE 100 43 968 A1 ein Verfahren zum Klimatisieren eines Raumes mit einer an der Raumdecke beabstandet angeordneten, luftdurchlässigen, sonst aber geschlossen ausgebildeten Klimadecke, wobei auf deren dem Raum abgewandten Seite mittels eines an der Klimadecke anliegenden, wasserdurchflossenen, Rohrleitungen aufweisenden Wärmetauschers ein Wärmestrom dem Raum zu- oder aus diesem abgeführt werden kann.

Die DE 10 2011084 423 A1 beschreibt ein Gebäude mit einer Raumdecke und unterhalb der Raumdecke angeordneten Kühldecke. Zwischen Kühldecke und Raumdecke befindet sich ein Deckenzwischenraum. Die Kühldecke weist ein plattenförmiges Deckenelement und damit in wärmeleitendem Kontakt stehende Wärmetauscherelemente auf, die von einem Wärmeträgermedium durchströmbar sind. Der Deckenzwischenraum ist mittels flächigen Raumbegrenzungselementen begrenzt, wodurch ein gerichteter Luftstrom von einer Öffnung zu einer anderen Öffnung erzeugbar ist.

Die DE 195 09 312 A1 beschreibt ein Verfahren zur Raumkühlung mittels Wärmetauscher und mit durch zwei Trennbleche separat gebildeten Luftdurchströmungswegen. Abgekühlte Raumluft fällt durch Eigenzirkulation durch nach unten führende Fallschächte. Luftaustrittsöffnungen liegen wesentlich über dem Fußboden. Durch das zusätzliche Austreten kühler Luft aus einer gegenüberliegenden Luftaustrittsöffnung und/oder Abkühlen von Raumluft durch einen Kühlkonvektor werden durch gegeneinander stoßende Raumluftströmungen im Fußbodenbereich die Raumluftgeschwindigkeiten klein gehalten.

In der DE 44 03 528 A1 ist ein Verfahren zur Raumkühlung mit abgehängten Kühldeckenelementen beschrieben. Der Zwischenraum zwischen einem Baukörper und einer Isolierung der Kühldecke ist zur zusätzlichen Kühllastabfuhr durch Konvektion und Strahlung von Raumluft durchströmbar.

Die DE 10 2011 108 090 A1 beschreibt ein Kühlsystem, bei dem die Luft eines zu kühlenden Raumes über die Oberfläche eines Kältemassenspeichers geführt wird, bspw. einer Betondecke, die mit wasserführenden Rohren gekühlt wird. Die durch den Massenspeicher gekühlte Luft strömt in einen Hohlraum zwischen Massenspeicher und Isolator und wird gezielt über Lüftungskanäle und Luftauslässe in den Raum unterhalb der Isolationsschicht abgegeben.

Zur Lüftung von Gebäuden beschreibt die US 4,535,684 A ein Belüftungssystem mit einem Frischluft-Einlass und einer Frischluftleitung, die auf der unteren Seite von senkrechten Hohlwänden angeordnet sind. Die Frischluftleitung umfasst eine Mehrzahl von Frischluft-Auslässen um frische Luft einem Raum zuzuführen. Eine Mehrzahl von Einlässen für verbrauchte Luft sind an der Decke angeordnet. Abluftleitungen sind in der Decke und senkrechten Wänden angeordnet und mit einem Abluft-Auslass gekoppelt.

Es kann als Aufgabe der Erfindung angesehen werden, eine Luft-Konditionierungsanlage, ein hiermit ausgerüstetes Gebäude und ein Luft-Konditionierungsverfahren anzugeben, die mit möglichst geringem Energieaufwand und Verlust an nutzbarer Fläche eine gute Luft-Konditionierung ermöglichen.

Die Aufgabe wird gelöst durch eine Luft-Konditionierungsanlage gemäß Anspruch 1, ein Gebäude hiermit gemäß Anspruch 8 und ein Verfahren gemäß Anspruch 11. Abhängige Ansprüche beziehen sich auf vorteilhafte Ausführungsformen der Erfindung.

Die erfindungsgemäße Luft-Konditionierungsanlage umfasst einerseits eine Deckentemperierungsvorrichtung zur Raumtemperierung und andererseits eine Lüftungsvorrichtung mit einem Lufteinlass und entfernt hiervon angeordneten Luftauslass. Die Luft-Konditionierungsanlage ist dabei für eine Etage vorgesehen, so dass bevorzugt alle genannten Elemente auf derselben Etage eines Gebäudes angeordnet sind.

Die Deckentemperierungsvorrichtung kann auch als Klimadecke bezeichnet werden. Sie umfasst in an sich bekannter Weise mindestens Temperierungselemente zur Anordnung an Raumdecken sowie einen Zufluss für ein Temperierungsmedium zu den Temperierungselementen. Je nach den klimatischen und saisonalen Anforderungen kann die Deckentemperierungsvorrichtung zur Heizung, d. h. Zuführung von Wärme in den Raum ebenso wie zur Kühlung, d. h. Abführung von Wärme aus dem Raum genutzt werden. Die Temperierungselemente können bspw. Deckenflächenelemente, bspw. Kupferrohre in Wärmeleitprofilen, Kunststoffrohre oder Kapillarrohrmatten sein, die an ihrer Oberfläche Wärme abgeben oder aufnehmen. In an sich bekannter Weise sind die Temperierungselemente an Leitungen des bevorzugt flüssigen Temperierungsmediums angeschlossen. Mittels des Temperierungsmediums wird zur Heizung Wärme zugeführt bzw. zur Kühlung abgeführt.

Das Temperierungsmedium wird bevorzugt mit geeigneter Temperierung, d. h. insbesondere mit einer jeweils passenden Vorlauftemperatur von einer Temperierungsvorrichtung, insbesondere einer Heizungs-/Kühlungsvorrichtung zugeführt. Diese kann sich auf derselben Etage befinden wie die Temperierungselemente. Bevorzugt kann allerdings auch eine Temperierungsvorrichtung das gesamte Gebäude oder wenigstens eine Mehrzahl von Etagen versorgen, wobei die notwendigen Leitungen für ein flüssiges Temperierungsmedium erheblich weniger Platz benötigen als herkömmliche Luftkanäle.

Die erfindungsgemäß vorgesehene Lüftungsvorrichtung umfasst mindestens einen Lufteinlass, an dem Außenluft angesaugt wird und einen entfernt hiervon angeordneten Luftauslass, an dem Luft nach Außen abgegeben wird. Luftein- und -auslass sind dabei so weit voneinander entfernt angeordnet, dass ein Kurzschluss, d. h. erneutes Ansaugen der ausgestoßenen Luft, ausgeschlossen ist. Die hierfür notwendige Distanz kann je nach den im Einzelfall vorliegenden Bedingungen variieren. Bevorzugt sind bspw. mindestens 5 Meter Abstand zwischen der Einlass- und der Auslassöffnung. Bevorzugt befinden sich Ein- und Auslass auf gleicher Höhe, d. h. innerhalb derselben Etage. Bei ausreichendem seitlichem Abstand können Ein- und Auslass dabei im Prinzip zur selben Gebäudeseite weisen. Bevorzugt weisen Ein- und Auslass zu unterschiedlichen Gebäudeseiten, besonders bevorzugt sind sie gegenüberliegend angeordnet.

Erfindungsgemäß ist am Lufteinlass mindestens ein Einlass-Wärmetauscher und am Luftauslass mindestens ein Auslass-Wärmetauscher vorgesehen. Einlass- und Auslass-Wärmetauscher werden mit einem Tauschmedium, bevorzugt einem flüssigen Wärmemedium, betrieben. Dabei sind erfindungsgemäß der Einlass-Wärmetauscher und der Auslass-Wärmetauscher zum Wärmeaustausch über eine Leitung für das Tauschmedium miteinander gekoppelt.

Durch die Kopplung der Wärmetauscher über das Tauschmedium können Energieverluste deutlich reduziert werden, die insbesondere bei deutlicher Temperaturdifferenz zwischen der konditionierten Raumluft und der Außenluft auftreten würden. Im Kühlfall kann so statt des Ausstoßes gekühlter Raumluft die gekühlte Abluft benutzt werden, um bereits eine Vorkühlung angesaugter Frischluft zu bewirken. Ebenso kann im Heizfall warme Abluft zur Aufheizung angesaugter Frischluft dienen.

Die thermische Kopplung über das Tauschmedium ermöglicht somit bei der erfindungsgemäßen entfernten Anordnung von Ein- und Auslass eine gute Energieeffizienz. Insbesondere gilt dies für etagenweise Lüftung, besonders für gegenüberliegend am Gebäude angeordneten Lufteinlass und Luftauslass.

Am Lufteinlass können verschiedene Aggregate zur Aufbereitung und Konditionierung der angesaugten Frischluft vorgesehen sein, bspw. Pumpen bzw. Kompressoren, Filter, Heiz- und/ oder Kühlaggregate, Be- und/ oder Entfeuchter, etc.

Gemäß einer Weiterbildung der Erfindung können am Lufteinlass ein Zuluft-Wärmetauscher und ein Nachtemperierungs-Wärmetauscher vorgesehen sein. Dabei ist bevorzugt der Zuluft-Wärmetauscher im Luftstrom vor den Nachtemperierungs-Wärmetauscher angeordnet. Zuluft-Wärmetauscher und Nachtemperierungs-Wärmetauscher werden bevorzugt mit einem flüssigen Tauschmedium betrieben. Dabei sind in der bevorzugten Ausführungsform der Zuluft-Wärmetauscher und der Nachtemperierungs-Wärmetauscher zum Wärmeaustausch über das Tauschmedium miteinander gekoppelt. Dies erweist sich als besonders vorteilhaft im Fall einer deutlichen Temperaturänderung der zugeführten Luft beim Durchgang durch den Lufteinlass, wenn diese bspw. zur Trocknung oder sonstigen Konditionierung zwischen Zuluft-Wärmetauscher und Nachtemperierungs-Wärmetauscher abgekühlt oder erwärmt wird. Beispielsweise kann mittels der bevorzugten Kopplung die in dem Zuluft-Wärmetauscher zugeführten Frischluft enthaltene Wärme genutzt werden, um den Luftstrom nach zwischenzeitlicher Kühlung zum Zwecke der Entfeuchtung wieder zu erwärmen.

Am Lufteinlass ist bevorzugt ein Trocknungs-Wärmetauscher zur Trocknung des Luftstroms vorgesehen. Bevorzugt erfolgt dies durch Kühlung des Luftstroms im Trocknungs-Wärmetauscher mittels eines Kühlmediums. Besonders bevorzugt ist der Trocknungs-Wärmetauscher im Luftstrom zwischen dem Zuluft-Wärmetauscher und dem Nachtemperierungs-Wärmetauscher angeordnet.

Bei den verschiedenen Wärmetauschern kommen bevorzugt flüssige Kühlmedien zum Einsatz, typischerweise Wasser. In an sich bekannter Weise wird in einem solchen Wärmetauscher das Medium durch Leitungen geführt, wobei der Luftstrom im Kontakt mit der Außenseite der Leitungen steht. In einer besonders bevorzugten Ausführung umfasst mindestens einer der Wärmetauscher eine Mehrzahl von Kunststoff-Kapillarleitungen zum Führen des jeweiligen Tauschmediums. Bevorzugt wird das Tauschmedium in einer Vielzahl von sehr dünnen Leitungen aus einem Kunststoffmaterial, bspw. PP-Material geführt. Beispielsweise können diese Kapillarleitungen als Bündel innerhalb eines Kanals angeordnet sein, die vom Luftstrom durchströmt wird. Die Bündel können innerhalb des Kanals bspw. in Spiralen verlaufen. Ein solcher Kapillarleitungs- Wärmetauscher zeigt ein besonders günstiges Verhalten im Hinblick auf mögliche Verschmutzung, die durch den Luftstrom trotz vorheriger Filterung eingebracht werden kann. Kunststoff-Kapillarrohr-Wärmetauscher sind korrosionsbeständig, preiswert herzustellen und langlebig.

Innerhalb der Gebäudeetage erfolgt bevorzugt eine Führung der Zu- und Abluft durch geeignete Leitungen, d. h. Luftführungskanäle, bevorzugt im Deckenbereich. So kann der Lufteinlass mit einer ersten Luftführung zu mindestens einem Raumauslass verbunden sein, bevorzugt zu einer Mehrzahl von Raumauslässen. Ebenso kann der Luftauslass mit einer zweiten Luftführung zu mindestens einem Raumeinlass verbunden, bevorzugt zu einer Vielzahl von Raumeinlässen. Die verschiedenen Räume innerhalb der Etage können dann jeweils mindestens einen Raumeinlass und einen Raumauslass aufweisen, die über die erste und zweite Luftführung mit dem Lufteinlass bzw. Luftauslass der jeweiligen Etage gekoppelt ist. So erfolgt eine geeignete Verteilung der Luft innerhalb der Räume der Etage.

Ein erfindungsgemäßes Gebäude umfasst mindestens zwei Etagen, üblicherweise aber eine deutlich größere Anzahl von Etagen, bspw. vier oder mehr, bevorzugt acht oder mehr, wobei auch Hochhäuser mit einer deutlich höheren Anzahl von Etagen entsprechend ausgerüstet sein können. Dabei sind die mindestens zwei, bevorzugt mehr oder auch alle Etagen jeweils mit einer Konditionierungsanlage wie vorstehend beschrieben ausgerüstet. Lufteinlass und Luftauslass jeder der Konditionierungsanlagen sind in der Außenwand der jeweiligen Etage angeordnet. Es erfolgt also bevorzugt eine etagenweise Lüftung. In der Kombination mit einer Klimadecke ist der für die Luft-Konditionierung erforderliche Luftvolumenstrom klein, weil die Luftversorgung nicht zur Raumtemperierung genutzt wird. Die Temperierung kann überwiegend, bis nahezu vollständig von Klimadecken übernommen werden. Somit sind großvolumige Kanäle zwischen den Etagen nicht notwendig.

Wie oben bereits beschrieben können aber zwischen den Etagen durchaus Leitungen für das Temperierungsmedium der Deckentemperierungsvorrichtung vorgesehen sein. Besonders bevorzugt ist somit eine zentrale Temperierung des Gebäudes bei etagenweiser Belüftung.

Nachfolgend wird eine Ausführungsform der Erfindung anhand von Zeichnungen näher beschrieben. Darin zeigen:
- Fig. 1: eine schematische Querschnittsansicht eines Gebäudes mit einer Mehrzahl von Etagen;
- Fig. 2: in einer schematischen Querschnittsansicht eine der Etagen des Gebäudes aus Figur 1 mit einer Deckentemperierungsvorrichtung und einer Lüftungsvorrichtung;
- Fig. 3: eine schematische Darstellung der Lüftungsvorrichtung aus Figur 2 mit Luftein-und Luftauslass.

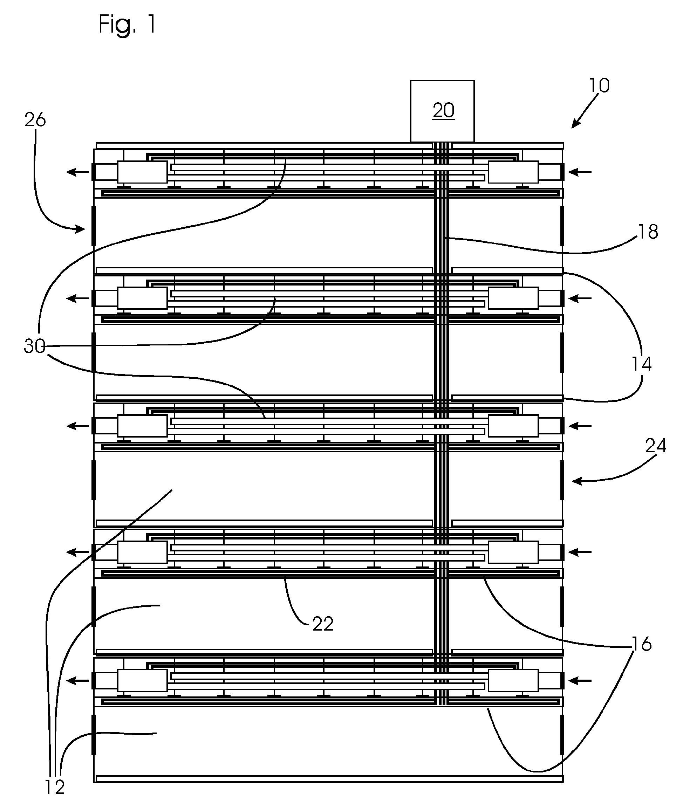

In Figur 1 ist beispielhaft ein Gebäude 10 mit fünf Etagen 12 dargestellt, unterteilt durch Geschossdecken 14. Das Gebäude 10 umfasst gegenüberliegende erste und zweite Gebäudefronten 24, 26.

Zur Temperierung der in den Figuren nicht unterteilt gezeigten Räume der Etagen 12, d. h. je nach Außentemperatur zur Kühlung oder Heizung sind in jeder der Etagen 12 Klimadecken 16 vorgesehen.

Die Klimadecken 16 umfassen innerhalb der Etagen 12 deckenseitig angeordnete, hier nur schematisch gezeigte Deckenflächenelemente 22, die an Leitungen angeschlossen sind. Das durch die Leitungen geführte Wasser wird als Temperierungsmedium benutzt. Die Leitungen sind an vertikal im Gebäude 10 verlaufende Wasserleitungen 18 angeschlossen, die mit einer zentralen Heizungs-/Kühlungsanlage 20 des Gebäudes 10 verbunden sind. Die Wasserleitungen 18 verlaufen zwischen den Etagen 12 durch die Geschossdecken 14 hindurch in geeigneten Schächten (nicht dargestellt).

Die zentrale Heizungs-/Kühlungsanlage 20 des Gebäudes 10, hier beispielhaft auf dem Dach angeordnet dargestellt, pumpt flüssiges Kühl-/Heizmedium mit geeigneter Vorlauftemperatur durch die Leitungen 18 zu den Klimadecken 16 der einzelnen Etagen 12. Dabei wird eine Temperierung der Räume auf den Etagen 12 des Gebäudes 10 erreicht, wobei in an sich bekannter Weise durch lokale Regler, Thermostate etc. die jeweils gewünschte Raumtemperatur einstellbar ist.

Das Gebäude 10 verwendet somit wie heute insbesondere für Hochhäuser bekannt eine zentrale Heizungs-/Kühlungsanlage, wobei allerdings zur Wärmeverteilung zu bzw. von dieser zentralen Anlage 20 keine zwischen den Etagen 12 verlaufenden Luftkanäle notwendig sind. Die Schächte zur Aufnahme der Leitungen 18 können vergleichsweise klein dimensioniert sein, so dass die innerhalb der Etagen 12 zur Verfügung stehende freie Fläche nur wenig verringert wird. Während somit die die Versorgung der Deckenflächenelemente 22 in den Räumen innerhalb des Gebäudes zur Temperierung der Räume zentral erfolgt, sind etagenweise separate Lüftungsvorrichtungen 30 vorgesehen, die jeweils vollständig innerhalb einer Etage 12 angeordnet sind und ohne Durchbruch durch die Geschossdecken 14 auskommen.

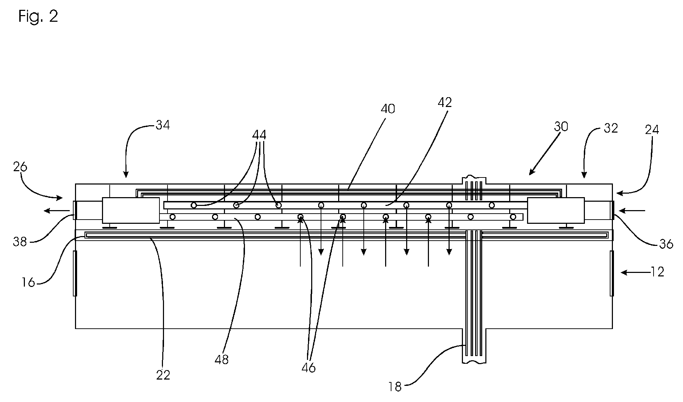

Wie für eine Etage 12 in Figur 2 schematisch gezeigt, umfasst jede Lüftungsvorrichtung 30 einen Lufteinlass 32 an der ersten Gebäudeseite 24 und einen Luftauslass 34 an der gegenüberliegenden zweiten Gebäudeseite 26. Hierfür sind in den Gebäudefronten 24, 26 Einlass- bzw. Auslassöffnungen 36, 38 vorgesehen. Äußere Umgebungsluft wird an der Einlassöffnung 36 durch den Lufteinlass 32, dessen Bestandteile nachfolgend näher erläutert werden, als Frischluft angesaugt. Abluft wird auf der gegenüberliegenden Seite am Luftauslass 34, dessen Bestandteile ebenfalls nachstehend näher erläutert werden, durch die Auslassöffnung 38 wieder nach Außen abgegeben. Die gesamte Lüftungsvorrichtung 30 ist vorzugsweise in einer abgehängten Flurdecke der Etage installiert.

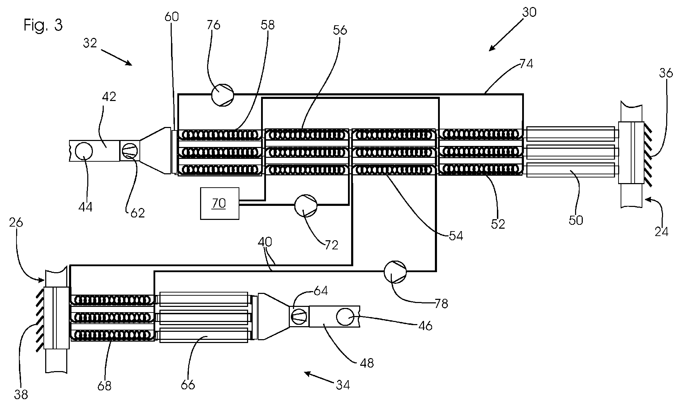

Lufteinlass 32 und Luftauslass 34 sind wie in Figur 2 gezeigt über eine Leitung 40 für Wasser als Tauschmedium thermisch miteinander gekoppelt. Details der Kopplung werden nachstehend im Hinblick auf Figur 3 erläutert.

Vom Lufteinlass 32 wird die zugeführte und aufbereitete Frischluft im Deckenbereich der Etage 12 in die einzelnen Räume (hier nicht separat dargestellt) verteilt über einen Frischluft-Luftkanal 42 mit eine Anzahl von Zuführungen zu Luftauslässen 44 in den einzelnen Räumen (hier schematisch direkt am Luftkanal 42 dargestellt).

Abluft aus den Räumen wird über Raumeinlässe 46 und einen Abluftkanal 48 im Deckenbereich der Etage 12 zum Luftauslass 34 geleitet.

Die Räume in der Etage 12 werden so stets mit Frischluft versorgt, während verbrauchte Raumluft abgeführt wird. Die Luftführung erfolgt dabei innerhalb der Etage 12 im Deckenbereich. Durch die ausreichend weit entfernte Anordnung von Einlassöffnung 36 und Auslassöffnung 38 am Gebäude 10, hier an gegenüberliegenden Gebäudefronten 24, 26, ist ein Luft-Kurzschluss ausgeschlossen. Dabei sind Lufteinlass 32 und Luftauslass 34 über die Leitungen 40 thermisch miteinander gekoppelt, so dass wie nachfolgend näher beschrieben wird sowohl im Kühlfall als auch im Heizfall Energie eingespart wird.

Figur 3 zeigt schematisch den Aufbau der Lüftungsvorrichtung 30 mit Lufteinlass 32 und Luftauslass 34.

Der Lufteinlass 32 umfasst eine Zuluftjalousie an der Einlassöffnung 36 in der Gebäudewand, ein dahinter angeordnetes Vogelgitter und dahinter einen Zuluftfilter 50, in den die einströmende äußere Umgebungsluft mechanisch gefiltert wird. Die so gefilterte Luft durchläuft nacheinander einen Zuluft-Wärmetauscher 52, einen Einlass-Wärmetausch 54, einen Trocknungs-Wärmetauscher 56 und einen Nachtemperierungs-Wärmetauscher. 58. Im weiteren Luftstrom danach ist zunächst ein Tropfenabscheider 60 angeordnet vor einem Ventilator 62, der die aufbereitete Zuluft über den Luftkanal 42 zu den Raumauslässen 44 fördert.

Am Luftauslass 34 wird die aus den Raumeinlässen 46 durch den Luftkanal 48 zuströmende Luft durch einen Ventilator 64, einen Abluftfilter 66 und einen Auslass-Wärmetauscher 68 zu Auslassöffnung 38 gefördert, an der noch ein Tropfenabscheider, ein Vogelgitter und eine Abluftjalousie vorgesehen sind.

Die Aufbereitung der zuströmenden Umgebungsluft im Lufteinlass 32 erfolgt im dargestellten Beispiel insbesondere durch den Trocknungs-Wärmetauscher 56. Dieser wird mit einem Kältemedium betrieben, das von einer Kühlvorrichtung 70 oder aus einer zentralen Kälteversorgungsanlage über eine Pumpe 72 zugeführt wird. Im Trocknungs-Wärmetauscher 56 wird der Luftstrom so weit abgekühlt, dass darin enthaltene Luftfeuchtigkeit überwiegend kondensiert und abgeführt werden kann, während der weitergeförderte Luftstrom danach ausreichend entfeuchtet ist.

Der Zuluft-Wärmetauscher 52 und der Nachtemperierungs-Wärmetauscher 58 sind über eine Leitung 74 für ein Tauschmedium, das durch eine Pumpe 76 gefördert wird, thermisch miteinander gekoppelt. Dies dient dazu, die im Trocknungs-Wärmetauscher 56 heruntergekühlte Luft im Nachtemperierungs-Wärmetauscher 58 wieder zu erwärmen. Um den Energiebedarf hierfür zu begrenzen wird durch den Zuluft-Wärmetauscher 52 der zuströmenden Luft Wärme entnommen, über die Leitung 74 zum Nachtemperierungs-Wärmetauscher 58 übertragen und dort zur Erwärmung des Luftstroms genutzt. Falls notwendig, bspw. wenn die Temperatur der zuströmenden Luft am Zuluft-Wärmetauscher 52 nicht ausreicht, kann auch zusätzlich eine Erwärmung des Mediums innerhalb der Leitung 74 durch ein geeignetes Heizaggregat erfolgen (nicht dargestellt).

Lufteinlass 32 und Luftauslass 34 sind wie bereits angegeben über die Leitung 40 thermisch miteinander gekoppelt. Die Leitung 40 koppelt dabei den Einlass-Wärmetauscher 54 und den Auslass-Wärmetauscher 68. Das Tauschmedium, bevorzugt Wasser, wird durch eine Pumpe 78 gefördert. Die thermische Kopplung des Einlass-Wärmetauschers 54 mit dem Auslass-Wärmetauscher 58 verringert sowohl im Heiz- als auch im Kühlfall den Energiebedarf, in dem im Heizfall der Abluft im Auslass-Wärmetauscher 68 Energie entzogen wird, die zur Vorerwärmung der Luft im Einlass-Wärmetauscher 54 genutzt wird, und im Kühlfall die ausströmende kühle Luft im Auslass-Wärmetauscher 58 genutzt wird, um mittels der thermischen Kopplung eine Vorkühlung der zuströmenden Luft im Einlass-Wärmetauscher 54 zu bewirken.

Im Betrieb der Lüftungsvorrichtung 30 wird der jeweilige Betriebszustand durch geeignete Sensoren, insbesondere Temperatursensoren (nicht dargestellt) an verschiedenen Stellen des Luftstroms sowie ggf. weitere Sensoren zur Erfassung der Luftmenge, Luftfeuchtigkeit etc. überwacht. Durch eine zentrale Steuerung (nicht dargestellt), die mit den steuerbaren Komponenten der Lüftungsvorrichtung 30 gekoppelt ist, d. h. insbesondere mit den Pumpen 72, 76, 78, mit der Kühlvorrichtung 70, mit den Ventilatoren 62, 64 sowie mit weiteren optional vorhandenen Aggregaten bspw. zur zusätzlichen Kühlung, Erwärmung etc., wird die Lüftungsvorrichtung 30 geregelt.

Bspw. angenommen für den Kühlfall soll zugeführte Frischluft an den Raumauslässen 44 eine Temperatur von 20 Grad Celcius und Luftfeuchtigkeit von 65% haben. Beispielhaft angenommen beträgt die Temperatur der Außenluft 45 Grad bei einer Luftfeuchtigkeit von 50%. Zur Entfeuchtung wird die zugeführte Luft im Trocknungs-Wärmetauscher 56 auf 12 Grad Celsius abgekühlt und anschließend durch den Nacherwärmungs-Wärmetauscher 58, in thermischer Kopplung mit dem Zuluft-Wärmetauscher 52, wieder auf die gewünscht Zuluftemperatur von 20 Grad Celsius erwärmt. Die Einhaltung der jeweils gewünschten Temperaturen wird durch geeignete Reglung der steuerbaren Komponenten mittels der zentralen Steuerung sichergestellt.

Die an den Raumeinlässen 46 abgesaugte Abluft hat bspw. eine Temperatur von 27 Grad Celsius bei einer Luftfeuchtigkeit von 55%. Durch die thermische Kopplung mit dem Einlass-Wärmetauscher 54 wird der Abluft im Auslass-Wärmetauscher 68 Wärme zugeführt, so dass die letztlich nach Außen abgegebene Abluft eine Temperatur von 35 Grad Celsius und eine Luftfeuchtigkeit von 90% aufweist. Hierdurch wird die zugeführte Frischluft im Einlass-Wärmetauscher 54 bereits vorgekühlt, so dass der Energiebedarf für den nachgeschalteten Trocknungs-Wärmetauscher 56 entsprechend verringert wird.

Die in der Lüftungsvorrichtung verwendeten Wärmetauscher können, wie symbolisch in den Darstellungen angedeutet, als Kapillarrohr-Wärmetauscher ausgebildet sein. Dabei strömt die Luft durch ein Rohr, in dem eine Vielzahl von Kunststoff-Kapillarleitungen in Spiralen verläuft, durch die das Tauschmedium geführt wird. Der Kapillarrohr-Wärmetauscher eignet sich besonders zum Wärmeaustausch in einem Luftstrom, weil auftretende Verschmutzungen leicht entfernbar sind.

## Patentansprüche

1. Luft-Konditionierungsanlage für eine Gebäudeetage (12), mit
- einer Deckentemperierungsvorrichtung (16) zur Raumtemperierung, wobei die Deckentemperierungsvorrichtung (16) mindestens Temperierungselemente (22) bei Anordnung an Raumdecken und einen Zufluss (18) für ein Temperierungsmedium aufweist,
- und einer Lüftungsvorrichtung (30), mindestens umfassend einen Lufteinlass zum Ansaugen von Außenluft (32) und entfernt hiervon angeordneten Luftauslass (34) zur Abgabe von Luft nach Außen,
- wobei am Lufteinlass (32) mindestens ein Einlass-Wärmetauscher (54) und am Luftauslass (34) mindestens ein Auslass-Wärmetauscher (68) vorgesehen ist,
- und wobei der Einlass-Wärmetauscher (54) und der Auslass-Wärmetauscher (68) zum Wärmeaustausch über eine Leitung (40) für ein Tauschmedium miteinander gekoppelt sind.

2. Luft-Konditionierungsanlage gemäß Anspruch 1, bei der
- der Lufteinlass (32) mindestens einen Zuluft-Wärmetauscher (52) und einen Nachtemperierungs-Wärmetauscher (58) aufweist,
- wobei der Zuluft-Wärmetauscher (52) und der Nachtemperierungs-Wärmetauscher (58) zum Wärmeaustauch über ein Tauschmedium miteinander gekoppelt sind.

3. Luft-Konditionierungsanlage gemäß einer der vorangehenden Ansprüche, bei der
- am Lufteinlass (32) ein Trocknungs-Wärmetauscher (56) zur Kühlung des Luftstroms mit einem Kühlemedium vorgesehen ist.

4. Luft-Konditionierungsanlage gemäß Anspruch 2 und 3, bei der
- der Trocknungs-Wärmetauscher (56) im Luftstrom zwischen dem Zuluft-Wärmetauscher (52) und dem Nachtemperierungs-Wärmetauscher (58) angeordnet ist.

5. Luft-Konditionierungsanlage gemäß einer der vorangehenden Ansprüche, bei der
- mindestens einer der Wärmetauscher Kunststoff-Kapillarleitungen zum Führen eines Mediums umfasst.

6. Luft-Konditionierungsanlage gemäß einem der vorangehenden Ansprüche, bei der
- der Lufteinlass (32) mit einer ersten Luftführung (42) zu zumindestens einem Raumauslass (44) verbunden ist,
- und der Luftauslass (34) mit mindestens einer zweiten Luftführung (48) von mindestens einem Raumeinlass (46) verbunden ist.

7. Luft-Konditionierungsanlage gemäß einem der vorangehenden Ansprüche, bei der
- der Lufteinlass (32) und der Luftauslass (34) gegenüberliegend angeordnet sind.

8. Gebäude mit
- mindestens zwei Etagen (12) jeweils mit einer Luft-Konditionierungsanlage gemäß einem der vorangegangen Ansprüche,
- wobei Lufteinlass (32) und Luftauslass (34) jeder Luft-Konditionierungsanlage an der Außenwand der jeweiligen Etage angeordnet sind.

9. Gebäude gemäß Anspruch 8, bei dem
- der Lufteinlass (32) und der Luftauslass (34) auf gegenüberliegenden Seiten des Gebäudes (10) angeordnet sind.

10. Gebäude gemäß einem der Ansprüche 8, 9, bei dem
- eine Temperierungsvorrichtung (20) zur Temperierung des Temperierungsmediums vorgesehen ist,
- und die Deckentemperierungsvorrichtungen (16) über eine gemeinsame Versorgungsleitung (18) zur Zuführung des Temperierungsmediums angeschlossen sind.

11. Verfahren zur Luft-Konditionierung von Räumen in einer Gebäudeetage, bei dem
- Raumluft temperiert wird, indem ein Temperierungsmedium einer Deckentemperierungsvorrichtung (16) zugeführt wird,
- und eine Zuführung von Frischluft und Abführung von Abluft erfolgt durch eine Lüftungsvorrichtung (30), die mindestens einen Lufteinlass (32) und entfernt hiervon angeordneten Luftauslass (34) aufweist,
- wobei eine Wärmeübertragung zwischen einem Einlass-Wärmetausche (54) am Lufteinlass (32) und einem Auslass-Wärmetausche (68) am Luftauslass (34) über ein durch eine Leitung (40) geführtes Tauschmedium erfolgt.
